# EUROPEAN PATENT SPECIFICATION

(11) **EP 2 174 101 B1**
(45) Date of publication and mention of the grant of the patent: **24.01.2018**
(21) Application number: 07748325.3
(22) Date of filing: 09.07.2007
(51) Int. Cl.: G01F 23/296, B60K 15/03

(54) **LIQUID LEVEL MEASUREMENT DEVICE**
FLÜSSIGKEITSSTAND-MESSEINRICHTUNG
DISPOSITIF DE MESURE DU NIVEAU D'UN LIQUIDE

(43) Date of publication of application: 14.04.2010
(73) Proprietor: Axsensor AB, 411 25 Göteborg (SE)
(72) Inventor: BOSTRÖM, Jan, S-413 05 Göteborg (SE)
(74) Representative: Awapatent AB
(86) International application number: PCT/SE2007/000673
(87) International publication number: WO 2008/008019

(56) References cited:
- WO-A1-2005/038415
- US-A- 5 941 279
- US-B1- 6 629 457
- US-B2- 6 607 005

## Description

### Technical field

The present invention relates to a liquid level measurement device. In particular, the present invention related to a device for providing a compensated acoustic measurement of the level of a liquid in a saddle tank. The present invention also relates to a method for providing a compensated acoustic measurement of the level of a liquid in a saddle tank.

### Technical background

An example of a liquid level measurement device is disclosed in the document WO2005038415. The device comprises a transducer arranged outside the liquid for transmitting and receiving acoustic signals, and a waveguide connected to the transducer and extending into the liquid. In the basic operation of the device, an acoustic signal is transmitted from the transducer into the waveguide, which signal is reflected by the surface of the liquid into which the waveguide extends. By knowing the transit time and the velocity of the signal, it is possible to calculate the liquid level. To cope with a saddle tank having two portions, the device can comprise an additional waveguide, where one waveguide extends into each portion of the saddle tank.

Since the velocity of sound is dependant on the composition of the gas it travels through, the device in WO2005038415 may further comprise means for feeding a flow of fluid originating from the tank into the part of the waveguide which is located above the liquid level, to compensate for gas composition. In a specific example, in a regular fuel tank, the flow is provided from a fuel reflux originating from a fuel pump. However, such a solution may be inconvenient for a saddle tank in case the measurement device is not placed close to the fuel pump, whereby additional dedicated piping etc. for feeding fluid into the waveguide is necessary.

### Summary of the invention

It is an object of the present invention to overcome this problem, and to provide an improved liquid level measurement device for a saddle tank.

This and other objects that will be evident from the following description is achieved by a device for providing a compensated measurement of the level of a liquid in a saddle tank, and a corresponding method, according to the appended claims.

According to an aspect of the invention, there is provided a device for providing a compensated acoustic measurement of the level of a liquid in a saddle tank, which saddle tank has a first and second section and an ejector system with a transportation pipe for transferring liquid between the sections, the device comprising a transducer assembly for transmitting and receiving acoustic signals, a waveguide connected to the transducer assembly and adapted to extend into one section of the saddle tank, and means for directing a flow of fluid from the transportation pipe of the ejector system along a portion of the waveguide which during operation is located above the liquid level.

In a saddle tank, an ejector system with a transportation pipe for transferring liquid between the sections of the saddle tank is usually provided, and the invention is based on the understanding that the flow of fluid in this transportation pipe conveniently can be utilized for compensation purposes. The flow of fluid along the waveguide levels the conditions throughout the waveguide, which allows for more accurate measurements.

The device advantageously comprises a second waveguide connected to the transducer assembly and adapted to extend into the other section of the saddle tank, wherein the directing means further is for directing a flow of fluid from the transportation pipe of the ejector system along a portion of the second waveguide which during operation is located above the liquid level. This allows compensated measurements in both sections of the saddle tank, which provides for a more accurate overall measurement. When using two waveguides, the transducer assembly can comprise a single transducer handling both waveguides, or two transducers each handling one waveguide. Further, the transducer or each of the transducers may be a combined unit, or comprise separate transmitter and receiver, e.g.

In one embodiment, the directing means is adapted to direct the flow of fluid into the waveguide(s). This embodiment allows compensation with respect to gas composition and temperature. Preferably, the directing means comprises a passage, such as a conduit, for transferring fluid from the transportation pipe into the waveguides. The passage (i.e. the conduit, for example) is preferably positioned at a narrow passage formed by an indentation at the bottom of the tank between the first and second sections. Transferring fluid from the transportation pipe to the waveguide(s) at this very position between the sections is very convenient from a construction point of view. The measurement device according to this embodiment is particularly useful in case the liquid to be measured at least partly is comprised of gasoline or petrol.

In another embodiment, the directing means is adapted to direct the flow of fluid from the transportation pipe along the exterior of the waveguide(s). This embodiment allows compensation with respect to temperature. Advantageously, the directing means is the transportation pipe. Also to transfer the temperature, the waveguide(s) and the transportation pipe should be arranged adjacent to each other. For example, part of the waveguide(s) can be arranged along side the transportation pipe. In another example, part of the waveguide(s) is accommodated in a housing and the transportation pipe runs adjacent to or through the housing, again for transferring the temperature from the transportation pipe to the waveguide. Further, the waveguide(s) and the transportation pipe can be integrated into a single structure, which facilitates manufacturing and assembly and lowers cost. An advantage with using the transportation pipe of the ejector system as the directing means is that no additional dedicated means for directing the flow of fluid is necessary. The measurement device according to this embodiment is particularly useful in case the liquid to be measured is diesel, since temperature is the predominant factor to consider for diesel.

Arranging the waveguide(s) adjacent to the transportation pipe, optionally as a single integrated structure, is also applicable to the above embodiment in combination with the conduit transferring fluid from the transportation pipe into the waveguides, providing an extended temperature compensation and facilitating manufacturing and assembly.

According to another aspect of the invention, there is provided a method for providing a compensated acoustic measurement of the level of a liquid in a saddle tank, which saddle tank has a first and second section and an ejector system with a transportation pipe for transferring liquid between the sections, the method comprising: transmitting acoustic signals from a transducer assembly into a waveguide adapted to extend into the one section of the saddle tank, receiving reflected acoustic signals to the transducer assembly from the waveguide, and directing a flow of fluid from the transportation pipe of the ejector system along a portion of the waveguide which during operation is located above the liquid level. This aspect exhibits similar advantages as the previously discussed aspect of the invention.

According to yet another aspect of the invention, there is provided a tank arrangement comprising: a saddle tank having a first and second section and an ejector system with a transportation pipe for transferring liquid between the sections, and a device according to the above discussion. This aspect exhibits similar advantages as the previously discussed aspects of the invention.

### Brief description of the drawings

These and other aspects of the present invention will now be described in more detail, with reference to the appended drawings showing currently preferred embodiments of the invention.
Fig. 1a is a schematic side view of a saddle tank with a measurement device according to an embodiment of the present invention,
Fig. 1b is an enlarged schematic partial perspective view of the measurement device of fig. 1a,
Fig. 1c is a schematic side view of a variant of the saddle tank and measurement device of fig. 1a,
Fig. 1d is an enlarged schematic partial perspective view of a variant of the measurement device of fig. 1b,
Fig. 2a is a schematic perspective view of a saddle tank with a measurement device according to another embodiment of the present invention,
Fig. 2b is a schematic side view of the saddle tank and measurement device of fig. 2a, and
Fig. 2c is a variant of the measurement device of figs. 2a-2b.

### Detailed description of currently preferred embodiments

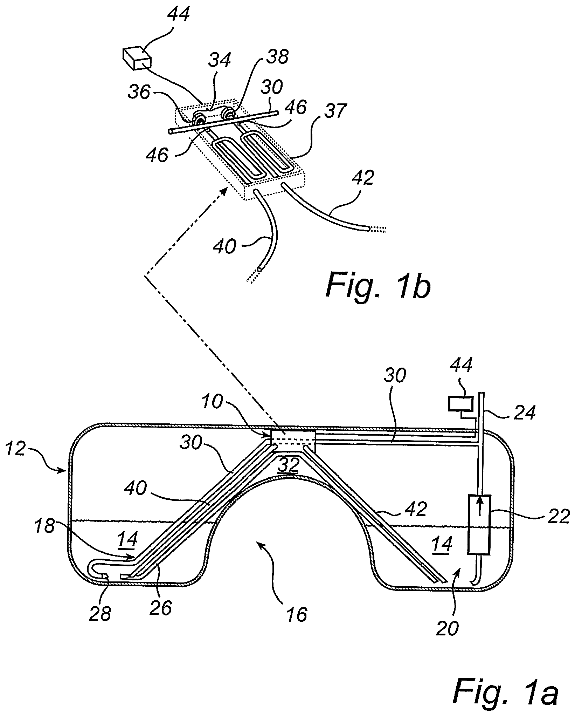

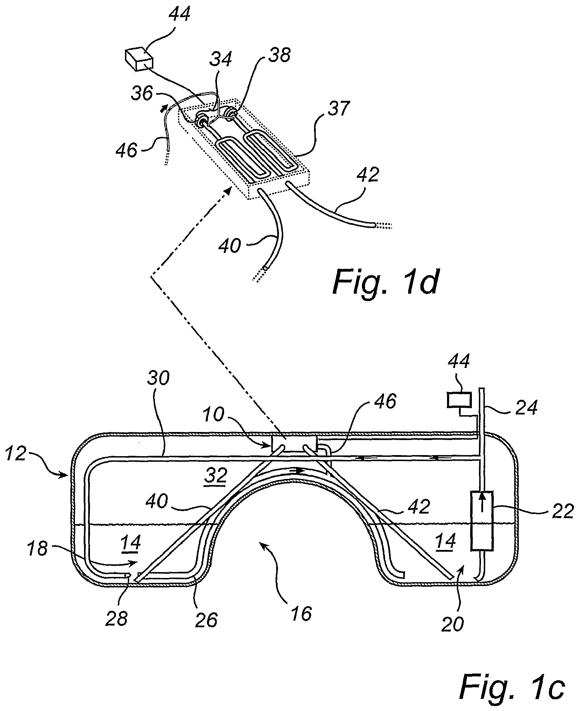

Fig. 1a is a schematic side view of a saddle tank 12 with a measurement device 10 according to an embodiment of the present invention. The saddle tank 12 can be a fuel tank for a vehicle, such as a car or a truck, and the measurement device 10 is adapted to detect the level of fuel 14 in the tank 12.

The saddle tank 12 has an indentation 16 at its bottom forming a first section 18 and a second section 20. The indentation 16 is usually for passage of the vehicle's drive shaft (not shown). A fuel pump 22 is further arranged in the second section 20 of the saddle tank 12 for pumping fuel out of the tank 12 via a feed pipe 24, and an ejector system is provided for transferring any fuel left in the first section 18 to the fuel pump 22.

The exemplary ejector system in fig. 1a comprises a first transportation pipe 26 extending from the first section 18 to the second section 20 and a second transportation pipe 30. In fig. 1a, the second transportation pipe 30 branches from the feed pipe 24, runs inside the tank 12 between the first section 18 and the second section 20, and ends with a nozzle 28 aimed towards the entrance of the first transportation pipe 26 in the first section 18.

The ejector system operates in accordance with the known principle of suction jet. Upon operation of the ejector system, a partial stream of fuel is fed from the feed pipe 24 via the second transportation pipe 30 to the nozzle 28. At the nozzle 28, a suction pressure is produced in a known manner, causing fuel in the first section 18 to be transferred via the first transportation pipe 26 to the second section 20, where it can be pumped out of the tank 12 by the fuel pump 22.

The structure and operation of the measurement device 10 will now be described with reference to figs. 1a and 1b. The measurement device 10 comprises a transducer assembly 34 with a first and second acoustic transducer 36, 38 as well as a first and second waveguide 40, 42. The first waveguide 40 is connected to the first transducer 36 and extends into the first section 18 of the saddle tank 12, while the second waveguide 42 is connected to the second transducer 38 and extends into the second section 20 of the saddle tank 12. The portion of each waveguide 40, 42 close to the transducer assembly 36 preferably has a flat spiral shape, as shown in fig. 1b, to allow reference measurements while maintaining a compact size of the measurement device. The transducer assembly 34 and the spiral portions of the waveguides 40, 42 are accommodated in a housing 37 placed inside the tank 12, at the top of the tank 12 in a narrow passage 32 above the indentation 16 between the sections 18, 20. The transducer assembly 34 is arranged in connection with an electronic control device 44. In fig. 1a, the control device 44 is placed outside the tank 12. The function of the control device 44 will be explained below.

Upon basic operation of the measurement device 10, the electronic control device 44 energizes the transducers 36, 38 to generate acoustic pulses. A pulse transmitted from the first transucer 36 is guided through the first waveguide 40 towards the surface of the fuel 14 in the first section 18 of the saddle tank 12, which pulse travels through the waveguide 40, is then reflected by the surface, and finally returns to the transducer 36. Similarly, a pulse transmitted from the second transucer 38 is guided through the second waveguide 42 towards the surface of the fuel 14 in the second section 20 of the saddle tank 12, which pulse travels through the waveguide 42, is then reflected by the surface, and finally returns to the transducer 38. In response to the returning pulses, the transducers 36, 38 generate corresponding signals to the control device 44. By knowing the the transit time and velocity of the pulses, the control device 44 can calculate the fuel level or fuel volume in the tank 12. The overall measure of the level of fuel 14 in the tank 12 advantageously is the average of the two measurements. To increase the accuracy of the measurements, the measurement device 10 can futher comprise a reference system (not shown). For instance, reference elements could be provided in the waveguides, preferably just after the the spiral portions and above the highest possible fuel level, creating a reference portion of the waveguide between the tranducer and the reference element. An example of such a reference system and more is described in the above mentioned document WO2005038415, the content of which hereby is incorporated by reference.

Also to increase the accuracy of the measurements, according to the current embodiment of the invention, there is formed a passage between the second transportation pipe 30 and the waveguides 40, 42, respectively. Namely, there are provided conduits 46 between the second transportation pipe 30, which preferably runs through the housing 37, such that passages are formed between the second transportation pipe 30 and the waveguides 40, 42 close to the transducer assembly 34. The conduit 46 is preferably narrower than the second transportation pipe 30 to provide a partial flow from the second transportation pipe 30. Upon operation, the partial stream of fuel is transferred from the second transportation pipe 30 to the "top" of the waveguides 40, 42, which fuel then runs back into the tank 12 through the waveguides 40, 42. Thus, a flow of fuel is provided inside the waveguides along portions of the waveguides which are located above the fuel level. The flow of fuel levels the conditions throughout the waveguides 40, 42 with respect to temperature and gas composition, which allows more accurate measurements since the velocity of the acoustic pulses (which depends on temperature and gas composition) becomes essentially the same throughout the portions of the waveguides 40, 42 above the main fuel level.

In a variant (not shown), fluid could be transferred directly from the transportation pipe 30 into the waveguides 40, 42 via a small opening therebetween. In this case, the conduit can be omitted. In another variant shown in figs. 1c-1d, the conduit 46 is provided between the first transportation pipe 26 of the ejector system and the waveguides 40, 42 such that a passage is formed between the first transportation pipe 26 and the waveguides 40, 42. The conduit 46 is positioned at the narrow passage 32 of the tank 12 between the sections 18, 20, and enters the waveguides 40, 42 close to the transducer assembly 34. Upon operation, a partial stream of fuel is transferred from the transportation pipe 26 via the conduit 46 to the "top" of the waveguides 40, 42, which fuel then runs back into the tank 12 through the waveguides 40, 42. Thus, a flow of fuel is provided inside the waveguides along portions of the waveguides which are located above the fuel level.

The measurement device according to the current embodiment is particularly useful in case the fuel to be measured at least partly is comprised of gasoline or petrol, which has a tendency to evaporate quite easy and also without difficulty will flow back into the tank through the waveguides.

The measurement device according to the invention using two waveguides is also advantageous in that only a single opening to the saddle tank is necessary. With the setup of figs. 1a-1d, only the waveguide 40 extends into the first section 18 via the narrow passage 32. The likelihood that the waveguide 40 will malfunction is very small, and even if it should, it is a relatively easy operation to insert a new waveguide into the first section 18 via the narrow passage 32 from the opening at the fuel pump side of the tank 12. This should be compared to a case where a traditional float measurement device is arranged in the first section 18. To be able to repair the float in case of malfunction, an additional opening in the tank at the first section for accessing said section to reach the float is required.

Also, a so called "ship-in-a-bottle" (SIB) technique may advantageously be used in the manufacturing, wherein the tank is formed around the measurement device (and any other tank components, such as the fuel pump, parts of the ejector system, etc.). A plastic fuel tank may for example be blow moulded to encompass the measurement device and any other tank components.

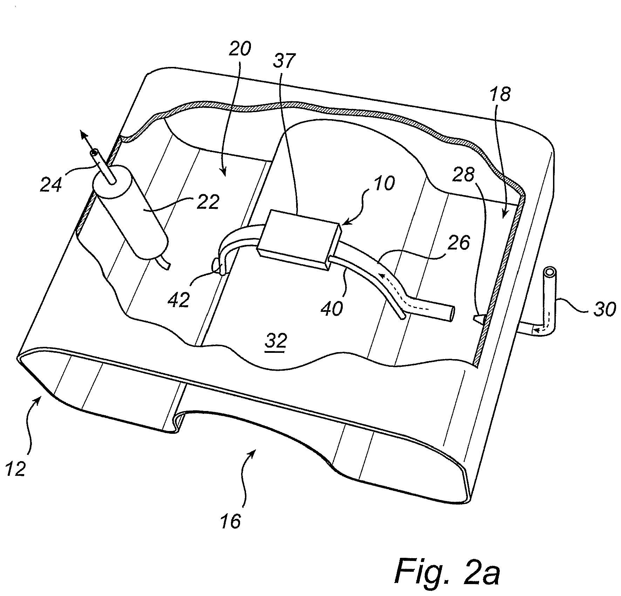

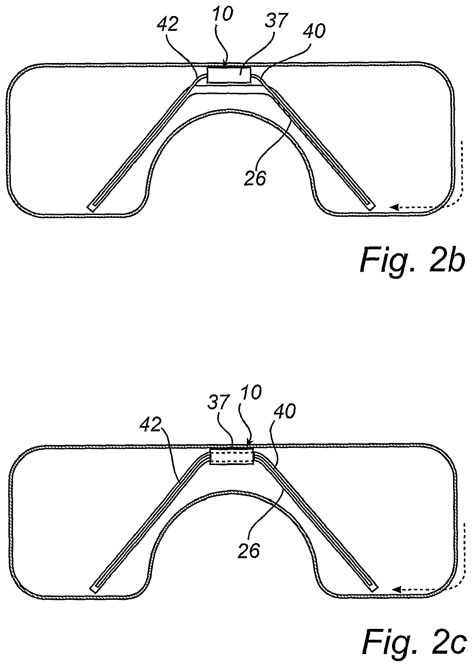

Figs. 2a-2c illustrate a saddle tank 12 with a measurement device 10 according to another embodiment of the present invention. The measurement device, saddle tank, and ejector system of figs. 2a-2c are similar to those of figs. 1a-1d, and only pertinent differences will be explained in detail.

In the measurement device shown in figs. 2a-2c, the passage/conduit is omitted. Instead, the waveguides 40, 42 are arranged along side and preferably in contact with a transportation pipe of the ejector system, preferably the first transportation pipe 26 as illustrated in figs. 2a-2c. The waveguides 40, 42 and the transportation pipe 26 may even be integrated to a single structure. Also, the waveguides 40, 42 and the transportation pipe 26 may be enclosed by a common elongated housing (not shown). Further, the spiral portions of the waveguides, or any housing 37 accommodating said portions, should be positioned close to or in contact with the first transportation pipe 26, as illustrated in figs. 2a-2b. Alternatively, the transportation pipe 26 could run through the housing 37, as illustrated in fig. 2c (however, in this case, there is no passage between the transportation pipe and the waveguides, in contrast to figs 1a-1b). The housing 37 may also be integrated with the waveguides 40, 42 and the transportation pipe 26 to form a single structure. Upon operation, since they are arranged adjacent to each other, the flow of fuel in the transportation pipe 26 is directed along the exterior of the waveguides 40, 42. This allows "the temperature" of the fuel in the transportation pipe 26 to be transferred to portions of the waveguides 40, 42 which are located above the fuel level, which levels the conditions throughout the waveguides 40, 42 with respect to temperature, which in turn allows more accurate measurements since the velocity of the pulses (which depends on temperature) becomes essentially the same throughout the waveguides 40, 42 located above the main fuel level. Thus, in the context of temperature compensation, instead of guiding fuel inside the waveguides as in figs. 1a-1d, fuel is in the current embodiment directed along the exterior of the waveguides.

The measurement device according to the current embodiment is particularly useful in case the fuel to be measured is diesel, since temperature is the predominant factor to consider for diesel. Gas composition compensation is not that relevant because diesel does not evaporate to such a large extent as for example gasoline or petrol.

The person skilled in the art realizes that the present invention by no means is limited to the preferred embodiments described above. On the contrary, many modifications and variations are possible within the scope of the appended claims. For example, arranging the waveguide(s) adjacent to the transportation pipe, as in figs. 2a-2c, is also applicable to the embodiment in figs. 1a-1d in combination with the passage/conduit, providing an extended temperature compensation and facilitating manufacturing and assembly. Here, the measurement device and one or more of the ejector system's transportation pipes could all be integrated to a single structure.

Also, the above ejector system can be designed in various ways within the scope of the present invention. For example, instead of being branched directly from the feed pipe, the second transportation pipe can be a fuel return pipe which returns excessive fuel from a fuel return system placed outside the tank back into the tank (as in fig. 2a). Also, instead of being arranged in the first section, the nozzle can be arranged at the first transportation pipe in the second section of the saddle tank. Suitable ejector systems which can be used in conjunction with the present invention are disclosed in the documents US5941279, DE19955133, DE4201037, and EP0864458, for example.

Further, although acoustic pulses have been used in the described embodiments, the inventive measurement device may also be used with other measurement modes such as standing wave measurement.

## Claims

1. A device (10) for providing a compensated acoustic measurement of the level of a liquid (14) in a saddle tank (12), which saddle tank has a first and second section (18; 20) and an ejector system for transferring liquid between the sections, the ejector system comprising a first transportation pipe (26) extending from the first section to the second section, and a second transportation pipe (30) extending from a feed pipe (24) to the second section, the device comprising:
a transducer assembly (34) for transmitting and receiving acoustic signals,
a waveguide (40) connected to the transducer assembly and adapted to extend into one section of the saddle tank, and
means (46) for directing a flow of fluid from the second transportation pipe (30) along a portion of the waveguide, which portion during operation is located above the liquid level.

2. A device according to claim 1, further comprising a second waveguide (42) connected to the transducer assembly and adapted to extend into the other section of the saddle tank, wherein the directing means (46) further is for directing a flow of fluid from the second transportation pipe (30) along a portion of the second waveguide which portion during operation is located above the liquid level.

3. A device according to claim 1 or 2, wherein the directing means is adapted to direct the flow of fluid into the waveguide(s).

4. A device according to claim 3, wherein the directing means comprises a passage, such as a conduit (46), for transferring fluid from the second transportation pipe (30) into the waveguide(s).

5. A device according to claim 4, wherein the saddle tank has an indentation (16) at its bottom, forming the first and second sections and a narrow passage (32) between the sections, and said passage is positioned at the narrow passage.

6. A device according to claim 1 or 2, wherein the directing means is adapted to direct the flow of fluid along the exterior of the waveguide(s).

7. A device according to claim 6, wherein the directing means is the first transportation pipe (26).

8. A device according to claim 1 or 2, wherein the waveguide(s) and the first transportation pipe (26) are arranged adjacent to each other.

9. A device according to claim 1 or 2, wherein at least part of the waveguide(s) and the first transportation pipe (26) are arranged along side to each other.

10. A device according to claim 1 or 2, wherein part of the waveguide(s) is accommodated in a housing (37), and wherein the first transportation pipe (26) runs adjacent to or through the housing.

11. A device according to claim 1 or 2, wherein the waveguide(s) and the first transportation pipe (26) are integrated to a single structure.

12. A method for providing a compensated acoustic measurement of the level of a liquid (14) in a saddle tank (12), which saddle tank has a first and second section (18; 20) and an ejector system for transferring liquid between the sections, the ejector system comprising a first transportation pipe (26) extending from the first section to the second section, and a second transportation pipe (30) extending from a feed pipe (24) to the second section, the method comprising:
transmitting acoustic signals from a transducer assembly (34) into a waveguide (40) adapted to extend into the one section of the saddle tank,
receiving reflected acoustic signals to the transducer assembly from the waveguide, and
directing a flow of fluid from the second transportation pipe (30) along a portion of the waveguide which portion during operation is located above the liquid level.

13. A tank arrangement comprising:
a saddle tank (12) having a first and second section (18; 20),
an ejector system for transferring liquid between the sections, the ejector system comprising a first transportation pipe (26) extending from the first section to the second section, and a second transportation pipe extending from a feed pipe (24) to the second section, and
a device according to any one of the claims 1-11.

## Patentansprüche

1. Vorrichtung (10) zum Bereitstellen einer kompensierten akustischen Messung des Pegels einer Flüssigkeit (14) in einem Satteltank (12), wobei der Satteltank einen ersten und einen zweiten Abschnitt (18; 20) und ein Saugstrahlpumpensystem zum Umlagern von Flüssigkeit zwischen den Abschnitten aufweist, wobei das Saugstrahlpumpensystem eine von dem ersten zu dem zweiten Abschnitt verlaufende erste Transportleitung (26) und eine von einer Speiseleitung (24) zum zweiten Abschnitt verlaufende zweite Transportleitung (30) umfasst, wobei die Vorrichtung Folgendes umfasst:
eine Wandlerbaugruppe (34) zum Senden und Empfangen von akustischen Signalen,
einen Wellenleiter (40), der mit der Wandlerbaugruppe verbunden und so ausgelegt ist, dass er in einen Abschnitt des Satteltanks hinein verläuft, und
ein Mittel (46) zum Leiten eines Fluidstroms aus der zweiten Transportleitung (30) an einem Teil des Wellenleiters entlang, der sich im Betrieb oberhalb des Flüssigkeitspegels befindet.

2. Vorrichtung nach Anspruch 1, die ferner einen zweiten Wellenleiter (42) umfasst, der mit der Wandlerbaugruppe verbunden und so ausgelegt ist, dass er in den anderen Abschnitt des Satteltanks hinein verläuft, wobei das Leitmittel (46) ferner zum Leiten eines Fluidstroms aus der zweiten Transportleitung (30) an einem Teil des zweiten Wellenleiters entlang dient, der sich im Betrieb oberhalb des Flüssigkeitspegels befindet.

3. Vorrichtung nach Anspruch 1 oder 2, wobei das Leitmittel so ausgelegt ist, dass es den Fluidstrom in den/die Wellenleiter leitet.

4. Vorrichtung nach Anspruch 3, wobei das Leitmittel einen Durchgang wie einen Kanal (46) zum Umlagern von Fluid aus der zweiten Transportleitung (30) in den/die Wellenleiter umfasst.

5. Vorrichtung nach Anspruch 4, wobei der Satteltank an seinem Boden eine Einbuchtung (16) aufweist, die den ersten und den zweiten Abschnitt und einen schmalen Durchgang (32) zwischen den Abschnitten bildet, und der Durchgang an dem schmalen Durchgang positioniert ist.

6. Vorrichtung nach Anspruch 1 oder 2, wobei das Leitmittel so ausgelegt ist, dass es den Fluidstrom außen an dem Wellenleiter/den Wellenleitern entlangleitet.

7. Vorrichtung nach Anspruch 6, wobei es sich bei dem Leitmittel um die erste Transportleitung (26) handelt.

8. Vorrichtung nach Anspruch 1 oder 2, wobei der/die Wellenleiter und die erste Transportleitung (26) nebeneinander angeordnet sind.

9. Vorrichtung nach Anspruch 1 oder 2, wobei zumindest ein Teil des Wellenleiters/der Wellenleiter und der ersten Transportleitung (26) nebeneinander angeordnet sind.

10. Vorrichtung nach Anspruch 1 oder 2, wobei ein Teil des Wellenleiters/der Wellenleiter in einem Gehäuse (37) untergebracht ist und die erste Transportleitung (26) neben dem Gehäuse oder durch das Gehäuse hindurch verläuft.

11. Vorrichtung nach Anspruch 1 oder 2, wobei der/die Wellenleiter und die erste Transportleitung (26) in eine Einzelkonstruktion integriert sind.

12. Verfahren zum Bereitstellen einer kompensierten akustischen Messung des Pegels einer Flüssigkeit (14) in einem Satteltank (12), wobei der Satteltank einen ersten und einen zweiten Abschnitt (18; 20) und ein Saugstrahlpumpensystem zum Umlagern von Flüssigkeit zwischen den Abschnitten aufweist, wobei das Saugstrahlpumpensystem eine von dem ersten zu dem zweiten Abschnitt verlaufende erste Transportleitung (26) und eine von einer Speiseleitung (24) zum zweiten Abschnitt verlaufende zweite Transportleitung (30) umfasst, wobei das Verfahren Folgendes umfasst:
Senden akustischer Signale von einer Wandlerbaugruppe (34) in einen Wellenleiter (40), der so ausgelegt ist, dass er in den einen Abschnitt des Satteltanks hinein verläuft,
Empfangen reflektierter akustischer Signals aus dem Wellenleiter an der Wandlerbaugruppe und
Leiten eines Fluidstroms aus der zweiten Transportleitung (30) an einem Teil des Wellenleiters entlang, der sich im Betrieb oberhalb des Flüssigkeitspegels befindet.

13. Tankanordnung, die Folgendes umfasst:
einen Satteltank (12) mit einem ersten und einem zweiten Abschnitt (18; 20), ein Saugstrahlpumpensystem zum Umlagern von Flüssigkeit zwischen den Abschnitten, wobei das Saugstrahlpumpensystem eine von dem ersten zu dem zweiten Abschnitt verlaufende erste Transportleitung (26) und eine von einer Speiseleitung (24) zum zweiten Abschnitt verlaufende zweite Transportleitung umfasst,
und eine Vorrichtung nach einem der Ansprüche 1 bis 11.

## Revendications

1. Dispositif (10) pour fournir une mesure acoustique compensée du niveau d'un liquide (14) dans un réservoir en selle (12), lequel réservoir en selle a des première et deuxième sections (18 ; 20) et un système éjecteur pour transférer du liquide entre les sections, le système éjecteur comprenant un premier tuyau de transport (26) s'étendant de la première section vers la deuxième section, et un deuxième tuyau de transport (30) s'étendant d'un tuyau d'alimentation (24) à la deuxième section, le dispositif comprenant :
un ensemble transducteur (34) pour émettre et recevoir des signaux acoustiques,
un guide d'ondes (40) connecté à l'ensemble transducteur et adapté pour s'étendre dans une section du réservoir en selle, et
un moyen (46) pour diriger un écoulement de fluide depuis le deuxième tuyau de transport (30) le long d'une partie du guide d'ondes, laquelle partie est située au-dessus du niveau de liquide, pendant le fonctionnement.

2. Dispositif selon la revendication 1, comprenant en outre un deuxième guide d'ondes (42) connecté à l'ensemble transducteur et adapté pour s'étendre dans l'autre section du réservoir en selle, dans lequel le moyen pour diriger (46) sert en outre à diriger un écoulement de fluide depuis le deuxième tuyau de transport (30) le long d'une partie du deuxième guide d'ondes, laquelle partie est située au-dessus du niveau de liquide, pendant le fonctionnement.

3. Dispositif selon la revendication 1 ou 2, dans lequel le moyen pour diriger est adapté pour diriger l'écoulement de fluide dans le(s) guide(s) d'ondes.

4. Dispositif selon la revendication 3, dans lequel le moyen pour diriger comprend un passage, tel un conduit (46), pour transférer du fluide du deuxième tuyau de transport (30) jusque dans le(s) guide(s) d'ondes.

5. Dispositif selon la revendication 4, dans lequel le réservoir en selle a une échancrure (16) sur son bas, formant les première et deuxième sections et un passage étroit (32) entre les sections, et ledit passage est positionné au niveau du passage étroit.

6. Dispositif selon la revendication 1 ou 2, dans lequel le moyen pour diriger est adapté pour diriger l'écoulement d'un fluide le long de l'extérieur du/des guide(s) d'ondes.

7. Dispositif selon la revendication 6, dans lequel le moyen pour diriger est le premier tuyau de transport (26).

8. Dispositif selon la revendication 1 ou 2, dans lequel le(s) guide(s) d'ondes et le premier tuyau de transport (26) sont disposés de façon adjacente entre eux.

9. Dispositif selon la revendication 1 ou 2, dans lequel au moins une partie du/des guide(s) d'ondes et le premier tuyau de transport (26) sont disposés côte à côte tout le long.

10. Dispositif selon la revendication 1 ou 2, dans lequel une partie du/des guide(s) d'ondes est adaptée dans un logement (37), et dans lequel le premier tuyau de transport (26) s'étend de façon adjacente au logement ou à travers celui-ci.

11. Dispositif selon la revendication 1 ou 2, dans lequel le(s) guide(s) d'ondes et le premier tuyau de transport (26) sont intégrés en une structure unique.

12. Procédé pour fournir une mesure acoustique compensée du niveau d'un liquide (14) dans un réservoir en selle (12), lequel réservoir en selle a des première et deuxième sections (18 ; 20) et un système éjecteur pour transférer du liquide entre les sections, le système éjecteur comprenant un premier tuyau de transport (26) s'étendant de la première section vers la deuxième section, et un deuxième tuyau de transport (30) s'étendant d'un tuyau d'alimentation (24) à la deuxième section, le procédé comprenant :
la transmission de signaux acoustiques d'un ensemble transducteur (34) dans un guide d'ondes (40) adapté pour s'étendre dans cette section du réservoir en selle,
la réception de signaux acoustiques réfléchis pour l'ensemble transducteur de la part du guide d'ondes, et
la direction d'un écoulement de fluide depuis le deuxième tuyau de transport (30) le long d'une partie du guide d'ondes, laquelle partie est située au-dessus du niveau de liquide, pendant le fonctionnement.

13. Agencement de réservoir comprenant :
un réservoir en selle (12) ayant des première et deuxième sections (18 ; 20),
un système éjecteur pour transférer du liquide entre les sections, le système éjecteur comprenant un premier tuyau de transport (26) s'étendant de la première section vers la deuxième section, et un deuxième tuyau de transport s'étendant d'un tuyau d'alimentation (24) à la deuxième section, et
un dispositif selon l'une quelconque des revendications 1-11.
